# EUROPEAN PATENT SPECIFICATION

(11) **EP 1 431 026 B1**
(45) Date of publication and mention of the grant of the patent: **06.08.2008**
(21) Application number: 03079130.5
(22) Date of filing: 19.12.2003
(51) Int. Cl.: B32B 15/08

(54) **Laminate with butt-welded metal layers**
Laminat mit stumpf geschweissten Metallschichten
Laminé avec des couches métalliques soudées bout à bout

(30) Priority: 20.12.2002 NL 1022237
(43) Date of publication of application: 23.06.2004
(73) Proprietor: Stork Fokker AESP B.V., 3351 LB Papendrecht (NL)
(72) Inventor: Labordus, Maarten, 2624 XL Delft (NL); Van Tooren, Michael Johannes Leonardus, 2611 SB Delft (NL); Verhoeven, Christiaan Gerrit, 3356 MA Papendrecht (NL)
(74) Representative: van Westenbrugge, Andries

(56) References cited:
- DE-C- 19 536 698
- US-A- 6 114 050

## Description

The invention relates to a laminate consisting of at least two metal layers and a fibre-reinforced plastic bonding layer located between the metal layers, at least one of the metal layers comprising metal sheets joined to one another and the metal layers have a thickness of less than 1 mm.

A laminate of this type is known from US-A-6 114 050 and is used for the production of lightweight constructions of high strength. Examples which may be mentioned are the skin panels that are found in the fuselage and wings of aircraft. A laminate of this type can also be used for other components, such as flaps, doors and the like. The relatively simple manner in which such a laminate can be given a specific shape plays an important role here.

In view of the high strength requirements which must be met by the products obtained in this way, high grade materials are frequently chosen for the various layers. An example for the metal layers is titanium. In that case sufficiently strong products can be obtained even with fairly small thicknesses, for example of less then 1 mm, of the metal layers.

A metal such as titanium is available in the form of rolls of material in strip form which have a restricted width in connection with the high rolling forces that are needed in order to achieve this thickness. Furthermore, titanium 15-3-3-3, a relatively inexpensive alloy with a high tensile strength, is only available in narrow strips for smaller thicknesses. This means that the panels produced therefrom would have a fairly large number of joins, which joins are found between the adjacent strips. In general, such joins are associated with disadvantages.

First of all, the production of such joins is fairly labour-intensive and thus expensive. There are local thickenings in the laminate at the location of the joins (splices) between the layers. These thickenings constitute disruptions in the surface of the panel, which is also undesirable on aerodynamic grounds. Moreover, fixing means through the panel cannot be used at the location of such a join.

According to US-A-6 114 050, the lamitate includes layers of titanium alloy foil alternating with layers of a polymeric matrix with reinforcing fibers embedded therein. These foils abut each other with minimal spacing. In order not to compromise laminate strength, the butt-joints must be offset.

The aim of the invention is, therefore, to provide a laminate of the type mentioned in the preamble that does not have these disadvantages. Said aim is achieved in that the metal sheets of a metal layer are joined to one another by means of a butt weld.

In the case of the laminate according to the invention, first of all a reliable welded join can be obtained between the various metal sheets from one and the same metal layer. In addition, by virtue of the butt weld the sheets merge smoothly into one another, as a result of which there is no unevenness that could have an adverse effect on the aerodynamic performance thereof. In particular, with this laminate the weld seam determined by the butt weld can have a thickness that is at most the same as the thickness of the metal sheets.

The metal layers can consist of an Al, Cu, Li, Mg, Si or Ti alloy.

The invention will be explained in more detail below with reference to the figures.

Figure 1 shows a cross-section through a laminate according to the invention.

Figure 2 shows a first set-up for the production of a metal layer for the laminate according to Figure 1.

Figure 3 shows a second production set-up.

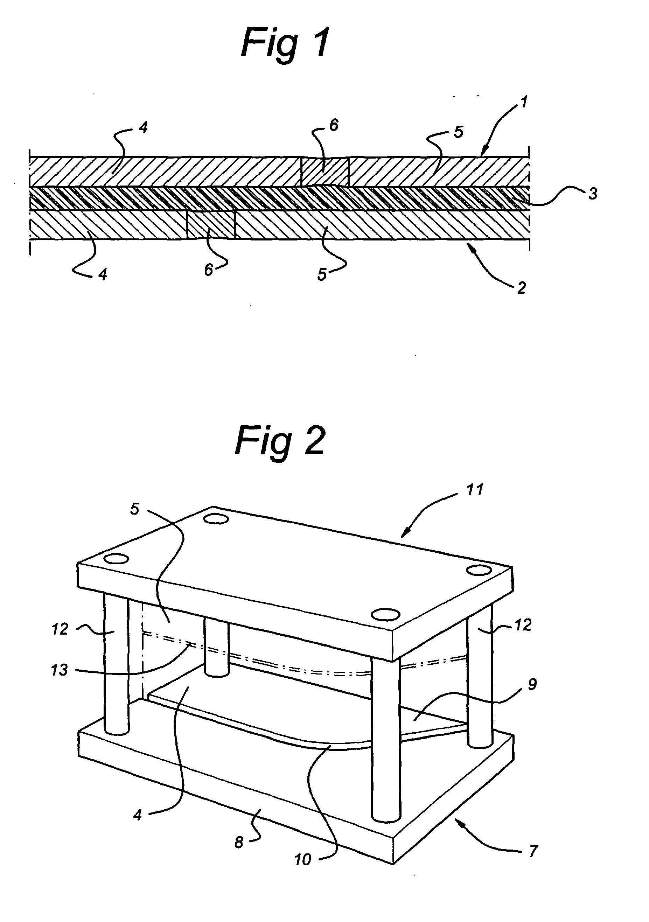

The laminate shown in Figure 1 comprises two metal layers 1, 2, which are joined to one another by a fibre-reinforced plastic bonding layer 3. Although two metal layers and one plastic bonding layer are shown in Figure 1, the laminate can, of course, comprise more than a total of three metal layers and plastic layers positioned alternately.

The two metal layers 1, 2 are each made up of two metal sheets 4, 5 which have been attached to one another by means of a butt weld 6. These butt welds 6 have a thickness that is essentially the same as the thickness of the metal sheets 4, 5. The join between said metal sheets 4, 5 therefore guarantees a smooth transition in the laminate.

Such a laminate is not only strong but is also exceptionally suitable for applications where the aerodynamics play an important role, such as for panels for the wings and the fuselage of an aircraft.

The metal layers 1, 2 can be welded from the metal sheets 5, 6 in various ways. In the set-up according to Figure 2, the one metal layer 4 is clamped in a lower clamping device 7 with two clamp halves 8, 9 which enclose between them a shaped slit 10. The upper clamping device 11 has a correspondingly shaped (not visible) slit 10. The sheets 4, 5 clamped in the clamping devices 7, 11 are shown diagrammatically.

The clamping devices 7, 11 are firmly attached to one another by means of the columns 12. The shaped metal sheets 4, 5 clamped in this way can then be welded to one another at the location of the seam 13.

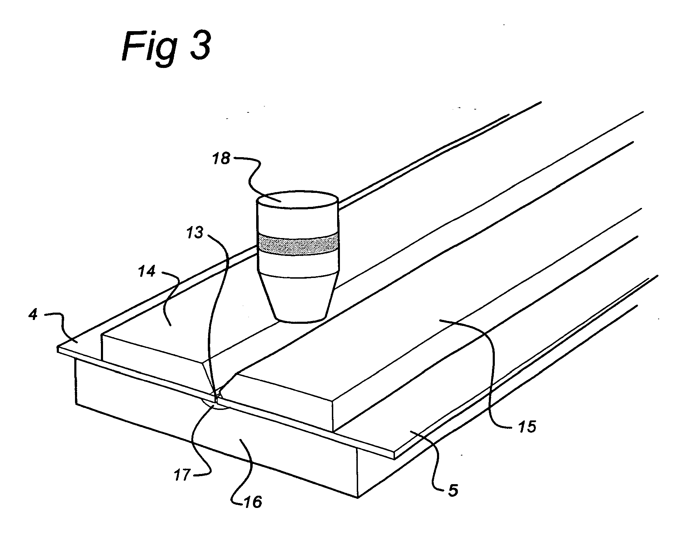

According to the set-up in Figure 3, the metal sheets 4, 5 are each clamped between a baseplate 16 and two clamping plates 14, 15. The baseplate 16 has a recess 17 that is directly below the seam 13 between the metal sheets 4, 5.

By means of the nozzle 18 it is possible to supply, for example, an argon atmosphere, so that welding, for example, titanium sheets 4, 5 to one another can take place under a controlled atmosphere. By using thin, narrow strips of metal it is also possible to make products with a double bend.

## Claims

1. Laminate consisting of at least two metal layers (1, 2) and a fibre-reinforced plastic bonding layer (3) located between the metal layers (1, 2), at least one of the metal layers (1, 2) comprising metal sheets (4, 5) joined to one another, which metal layers (1, 2) have a thickness of less than 1 mm, **characterised in that** the metal sheets (4, 5) of a metal layer (1, 2) are joined to one another by means of a butt weld (6).

2. Laminate according to Claim 1, wherein the weld seam determined by the butt weld (6) has a thickness that is at most the same as the thickness of the metal sheets (4, 5).

3. Laminate according to one of the preceding claims, wherein the metal sheets (4, 5) consist of Al, Cu, Li, Mg, Si or Ti or an alloy thereof.

4. Laminate according to Claim 3, wherein the Ti alloy is 15-3-3-3.

## Patentansprüche

1. Laminat bestehend aus wenigstens zwei Metalllagen (1, 2) und einer Bindelage (3) aus faserverstärktem Kunststoff, die zwischen den Metalllagen (1, 2) angeordnet ist, wobei wenigstens eine der Metalllagen (1, 2) Metallbleche (4, 5) aufweist, die aneinander gebunden sind und eine Stärke von weniger als 1 mm aufweisen, **dadurch gekennzeichnet, dass** die Metallbleche (4, 5) einer Metalllage (1, 2) durch eine Stumpfschweißung (6) aneinander gebunden sind.

2. Laminat nach Anspruch 1, wobei die Schweißnaht, die durch die Stumpfschweißung (6) bestimmt ist, eine Stärke aufweist, die höchstens die gleiche wie die Stärke der Metallbleche (4, 5) ist.

3. Laminat nach einem der vorausgehenden Ansprüche, wobei die Metallbleche (4, 5) aus Al, Cu, Li, Mg, Si oder Ti oder einer Legierung davon bestehen.

4. Laminat nach Anspruch 3, wobei die Ti-Legierung 15-3-3-3-Titan ist.

## Revendications

1. Laminé composé d'au moins deux couches métalliques (1, 2) et d'une couche d'assemblage en matière plastique renforcée de fibres (3) située entre les couches métalliques (1, 2), au moins l'une des couches métalliques (1, 2) comprenant des feuilles métalliques (4, 5) assemblées l'une à l'autre, couches métalliques (1, 2) qui ont une épaisseur de moins de 1 mm, **caractérisé par le fait que** les feuilles métalliques (4, 5) d'une couche métallique (1, 2) sont assemblées l'une à l'autre au moyen d'une soudure bout à bout (6).

2. Laminé selon la revendication 1, dans lequel le joint de soudure déterminé par la soudure bout à bout (6) a une épaisseur qui est de tout au plus identique à l'épaisseur des feuilles métalliques (4, 5).

3. Laminé selon l'une des revendications précédentes, dans lequel les feuilles métalliques (4, 5) sont en Al, Cu, Li, Mag, Si ou Ti ou un alliage de ceux-ci.

4. Laminé selon la revendication 3, dans lequel l'alliage de Ti est 15-3-3-3.
